# EUROPÄISCHE PATENTSCHRIFT

(11) **EP 3 043 542 B1**
(45) Veröffentlichungstag und Bekanntmachung des Hinweises auf die Patenterteilung: **25.09.2019**
(21) Anmeldenummer: 15198309.5
(22) Anmeldetag: 07.12.2015
(51) Int. Cl.: H04M 7/00, H04M 3/42, H04M 3/51

(54) **TELEKOMMUNIKATIONSSYSTEM SOWIE VERFAHREN ZUM FLEXIBLEN STEUERN DES TELEKOMMUNIKATIONSSYSTEMS DURCH EINEN DURCH EINE APPLIKATION AN EINE PLATTFORM ERTEILTEN SCHALTAUFTRAG**
TELECOMMUNICATION SYSTEM AND METHOD FOR FLEXIBLE CONTROL OF THE TELECOMMUNICATIONS SYSTEM BY A SWITCHING ORDER ISSUED BY AN APPLICATION TO A PLATFORM
SYSTÈME DE TÉLÉCOMMUNICATION ET PROCÉDÉ DE COMMANDE FLEXIBLE DU SYSTÈME DE TÉLÉCOMMUNICATION À L'AIDE D'UN PROGRAMME DE COMMANDE FOURNI PAR UNE APPLICATION SUR UNE PLATEFORME

(30) Priorität: 19.12.2014 DE 102014019240
(43) Veröffentlichungstag der Anmeldung: 13.07.2016
(73) Patentinhaber: Unify GmbH & Co. KG, 80807 München (DE)
(72) Erfinder: Rist, Claus, 44797 Bochum (DE)
(74) Vertreter: Fritzsche, Thomas

(56) Entgegenhaltungen:
- US-A1- 2006 070 081
- "SERVICES FOR COMPUTER SUPPORTED TELECOMMUNICATION APPLICATIONS", STANDARD ECMA 269, 1. Dezember 2011 (2011-12-01), Seiten 96-97, XP002757531,
- IOANNA LYTRA ET AL: "A pattern language for service-based platform integration and adaptation", PATTERN LANGUAGES OF PROGRAMS, ACM, 2 PENN PLAZA, SUITE 701 NEW YORK NY 10121-0701 USA, 11. Juli 2012 (2012-07-11), Seiten 1-27, XP058052300, DOI: 10.1145/2602928.2603080 ISBN: 978-1-4503-2943-9

## Beschreibung

Die vorliegende Erfindung betrifft ein Verfahren gemäß Anspruch 1 zum flexiblen Steuern eines Telekommunikationssystems durch einen durch eine Applikation an eine Plattform erteilten Schaltauftrag, ein Computerprogrammprodukt gemäß Anspruch 8 zur Implementierung des Verfahrens, einen maschinenlesbaren Datenträger gemäß Anspruch 9 mit darauf gespeichertem Computerprogrammprodukt sowie eine Telekommunikationsanordnung gemäß Anspruch 10 zum flexiblen Ausführen eines durch eine Applikation erteilten Schaltauftrags.

Für die folgende Beschreibung seien folgende Begriffe kurz erläutert:
Eine Plattform ist eine Kommunikationsplattform wie beispielsweise eine Vermittlungsstelle oder eine Telekommunikationsanlage (auch als PBX bzw. "Private Branch Exchange" bezeichnet).
Eine Applikation ist beispielsweise ein Computerprogramm, das auf einem Endgerät (z.B. First-Party-CTI bzw. Einzelplatzlösung, vgl. z.B. http://www.estos.de/produkte/unifiedcommunications/uc/was-ist-first-party-cti.html) läuft und dem Aufbau oder dem Betrieb einer Telefonverbindung bzw. "Call" oder Datenverbindung dient, oder ein Callcenter (Third-Party-CTI bzw. Netzwerklösung, vgl. z.B. http://www.estos.de/produkte/unifiedcommunications/uc/was-ist-third-party-cti.html), das der Verteilung von Anrufen auf Agenten dient.
Ein Schaltauftrag bei der Vermittlungstechnik ist beispielsweise: eine Rufanforderung, eine Rufannahme, ein Rufabbau, eine Rufweiterschaltung, eine Rufvermittlung. Außerdem zählen die Steuerung eines Displays, das An- und Abschalten von Leistungsmerkmalen sowie die Auswahl von Agenten und das Handling von Ansagen (beispielsweise in einem Callcenter) zu den Schaltaufträgen.

Die US 2006/0070081 A1 offenbart ein System zum Steuern einer Telefoninfrastrukturvorrichtung, dass eine auf Objektorientierung basierende Applikation aufweist, die ein zum Speichern von zu einer physikalischen oder logischen Vorrichtung gehörigen Information geeignetes Vorrichtungsobjekt, ein zum Speichern von zu einem Anruf zwischen zumindest zwei Vorrichtungen gehöriger Information geeignetes Anrufobjekt, ein zum Bereitstellen von Spracherkennung geeignetes Hörobjekt, ein zum Bereitstellen von künstlicher Sprache geeignetes Mitteilungsobjekt und ein zum Speichern von zu einer Verbindung zwischen dem Anrufobjekt und einem von dem Vorrichtungsobjekt, dem Hörobjekt und dem Mitteilungsobjekt gehöriger Information geeignet ist.

"A pattern language for service- based platform integration and adaption" von Lytra et al. (Pattern languages of programs, ACM, 2 Penn Plaza, Suite 701, New York NY 10121-0701 USA, 11. Juli 2012, Seiten 1 bis 27) befasst sich mit Software-Plattformen verschiedener Softwaresysteme, auf denen unterschiedliche Applikationen entwickelt und betrieben werden. Die verschiedenen Systeme, deren Plattformen und deren Applikationen werden im Hinblick auf ihre Kompatibilität hin beschrieben.

Gemäß dem Industriestandard ECMA-269 (European Computer Manufacturer's Association) ist festgelegt, dass eine Plattform (auch als "Switching Function" bezeichnet) bei CSTA (Computer Supported Telecommunications Applications: Protokollspezifikation, die für den Datenverkehr zwischen einer Telefonanlage und Computerprogrammen verwendet wird) die Möglichkeit hat, einen Schaltauftrag (auch als "Service" bezeichnet) einer Applikation (Computing Function) in einer der beiden folgenden Ausführungsarten (Modi) durchzuführen:
a) "atomic" bzw. vermittlungstechnisch begleitend, was einer überprüften Ausführung des Schaltauftrags bzw. Service entspricht, und
b) "fire and forget" "bzw. Multi-Step", was einer ungeprüften Ausführung des Schaltauftrags entspricht.

Dies ist in ECMA-269 Clause 9.2.1 niedergelegt. Die jeweilige Art der Implementierung wird vom Hersteller für die Plattform (Switching Function) statisch - also unveränderbar - festgelegt und kann über Anmeldeprozeduren innerhalb des CSTA-Protokolls durch die Applikation (Computing Function) ermittelt bzw. abgefragt werden, wodurch dann festgelegt ist, in welchem Modus alle eingehenden Schaltaufträge von der betreffenden Plattform ausgeführt werden. Die Plattformen haben daher die Wahl, einen Schaltauftrag entweder nach Verfahren a) oder nach Verfahren b) zu implementieren. Welches Verfahren für welchen Schaltauftrag genutzt wird, kann die Applikation erfragen.

Bei der automatischen Anrufverteilung durch eine Applikation auf einen Agenten hat sich bei kleineren und mittleren Unternehmen das Verfahren gemäß dem ersten Ausführungsmodus "vermittlungstechnisch begleitend" bewährt, was einer überprüften Ausführung dieses Service mit einer entsprechend langen Servicelaufzeit bedeutet. Eine manuelle Anrufverteilung durch einen Vermittlungsplatz auf einen anderen Teilnehmer wünscht sich jedoch genau den anderen, zweiten Ausführungsmodus "sofort und ungeprüft" bzw. "fire and forget", was eine kurze Servicelaufzeit mit sich zieht. Somit besteht ein Konflikt beim Anwender, da der Vermittlungsplatz seine Anrufe nicht ungeprüft verteilen kann und es leicht zu einem zeitlichen Verzug kommen kann, wenn gleichzeitig eine Callcenter-Applikation die Anrufe geprüft auf Agenten verteilt.

Hierdurch ergibt sich das Problem, dass dieses System nicht flexibel genug ist, da sich der Hersteller der Plattform auf ein Verfahren festgelegt hat und daher die Applikation festen Vorgaben folgen muss.

Der vorliegenden Erfindung liegt daher die Aufgabe zugrunde, die starren Vorgaben des Standards aufzulösen und ein flexibleres Handhaben der Abarbeitung der Schaltaufträge zu ermöglichen.

Diese Aufgabe wird gelöst mit einem Verfahren gemäß Anspruch 1, einem dieses Verfahren implementierenden Computerprogrammprodukt gemäß Anspruch 8, einem maschinenlesbaren Datenträger gemäß Anspruch 9 mit darauf gespeichertem Computerprogrammprodukt bzw. einer Telekommunikationsanlage gemäß Anspruch 10. Vorteilhafte Weiterbildungen der Erfindung sind Gegenstand der abhängigen Ansprüche.

Ein Schaltauftrag, der mit dem erfindungsgemäßen Verfahren abgearbeitet werden kann, kann in folgender Weise ausgeführt werden:
a) in einem ersten Ausführungsmodus, in dem der Schaltauftrag vermittlungstechnisch begleitend und geprüft ausgeführt wird, und
b) in einem zweiten Ausführungsmodus, in dem der Schaltauftrag sofort und ungeprüft ausgeführt wird.

Das erfindungsgemäße Verfahren zeichnet sich dadurch aus, dass gemäß einer ersten Variante die Applikation, bevor sie den Schaltauftrag an die Plattform schickt, in jedem Fall einzeln prüft und entscheidet, in welchem Ausführungsmodus dieser Schaltauftrag ausgeführt werden soll, und einen derartigen, entsprechend gekennzeichneten bzw. mit einem Steuerparameter versehenen Schaltauftrag an die Plattform schickt, woraufhin diese den Schaltauftrag entsprechend ausführt. Gemäß einer zweiten Variante prüft und entscheidet die Plattform vor der Durchführung des Schaltauftrags fallweise, in welchem Ausführungsmodus sie diesen Schaltauftrag dann ausführt. Sollten gemäß einer dritten Variante sowohl die Applikation als auch die Plattform für einen Schaltauftrag fallweise prüfen und entscheiden, in welchem Ausführungsmodus dieser Schaltauftrag ausgeführt werden soll, so obliegt es der jeweiligen Implementierung, welcher Prüfung und Entscheidung vorteilsweise der Vorrang gegeben wird. Die Mitteilung hierüber erfolgt verfahrensgemäß über eine Synchronisation der Applikation und der Plattform. Also besteht die Möglichkeit, durch den Hersteller der Plattform mittels der Synchronisation mitzuteilen, wie eine potentielle Kollision aufgelöst würde.

Dies ermöglicht eine sehr flexible Handhabung der unterschiedlichsten Schaltaufträge, da deren Abarbeitung nicht an einen bestimmten Ausführungsmodus gebunden ist, sondern entweder von der Applikation in dem ersten Ausführungsmodus oder in dem zweiten Ausführungsmodus in Auftrag gegeben oder alternativ von der Plattform in geeigneter Weise ausgeführt werden kann.

Gemäß einer vorteilhaften Weiterbildung des erfindungsgemäßen Verfahrens geht die Applikation dabei so vor, dass sie den Schaltauftrag mit einem ersten Steuerparameter versieht, welcher den Ausführungsmodus bezeichnet, mit dem der Schaltauftrag abgearbeitet werden soll.

Gemäß einer weiteren vorteilhaften Ausführungsform des erfindungsgemäßen Verfahrens versieht die Applikation den Schaltauftrag mit einem zweiten Steuerparameter, der im Fall der Nicht-Ausführbarkeit des Schaltauftrags eine Fehlerbehandlung ermöglicht und festlegt, welchen Zustand die Plattform einnehmen soll. Für das Beispiel einer Rufweiterschaltung, die auch als "Deflect Call" bezeichnet wird, kann die Plattform dann folgende Zustände einnehmen:
- Rückführung in den ursprünglichen Rufzustand (auch als "Initial" oder "Default Call State" bezeichnet),
- eine Weiterschaltung zu einem Vermittlungsplatz, was auch als Abwurf oder "Intercept" bezeichnet wird,
- einen Wiederanruf ("Recall"),
- Anzeigen eines Besetzt-Zustands und keine weitere Aktion (auch als "Fail" bezeichnet),
- Aufschalten in ein bestehendes Gespräch (auch als "Override" bezeichnet),
- Anklopfen ("Queue")
- Rufweiterschaltung, auch mit CFNR ("Call Forwarding on No Reply") bezeichnet.

Die vorgenannte Liste ist selbstverständlich nicht abschließend, sondern nahezu beliebig erweiterbar.

Es kann von Vorteil sein, wenn die Plattform der Applikation bei deren Hochfahren mitteilt, ob sie eine flexible Ausführung von Schaltaufträgen, wie sie vorstehend beschrieben wurde, überhaupt zulässt bzw. ermöglicht. Dies ist insbesondere dann wünschenswert, wenn sowohl Plattformen mit einer flexiblen Ausführungsmöglichkeit von Schaltaufträgen als auch Plattformen ohne diese Möglichkeit in einem Telekommunikationssystem vorhanden sind. Dadurch erfährt die Applikation, welche Schaltaufträge sie sinnvollerweise erteilen kann bzw. sollte. Unterstützt die Plattform die neuen Parameter dagegen nicht, so würde eine Anforderung seitens der Applikation ignoriert. D.h. die Plattform muss das Verfahren implementiert haben.

Erfindungsgemäß können somit durch die Einführung der vorgenannten Parameter die bereits beschriebenen unterschiedlichen Anforderungen an die Systemreaktion durch eine Konfiguration und/oder den Anwender selbst entweder statisch oder dynamisch bereitgestellt werden, was beispielsweise mittels einer grafischen Benutzeroberfläche erfolgen kann. Demzufolge ergeben sich neue flexiblere Realisierungskonzepte, wodurch in dem vorgenannten Beispiel ein Vermittlungsplatz seine Anrufe ohne Verzögerung verteilen und das Callcenter in gewohnter Weise Gespräche gesichert an Agenten weiterverteilen kann.

Gemäß einer alternativen Vorgehensweise prüft die Plattform die Eigenschaften eines an das Telekommunikationssystem angeschlossenen Endgeräts und führt den Schaltauftrag nach Maßgabe dieser Eigenschaften aus. Diese Eigenschaften des Endgeräts sind beispielsweise "Vermittlungsplatz", "Agent" oder "Warteschlange eines Callcenters". Alternativ oder zusätzlich kann die Plattform die Gesamtkonfiguration des Telekommunikationssystems prüfen und berücksichtigen. Hierzu gehört, dass in der Plattform beispielsweise ein Vermittlungsplatz festgelegt wird, Teilnehmer sich als Agenten anmelden, eine Warteschlange für ein Callcenter eingerichtet wird, usw. Alternativ oder zusätzlich kann die Plattform auch Zusatzeigenschaften des Schaltauftrags prüfen und bei der Abarbeitung des Schaltauftrags berücksichtigen. In anderen Worten wird bei dieser Ausführungsform so vorgegangen, dass nicht gewisse Parameter zugeordnet werden, wie dies bei vorstehend beschriebenen Ausführungsformen der Fall ist, sondern dass solche Parameter aus bestimmten Konfigurationsdetails betreffender Endgeräte abgefragt bzw. abgeleitet werden.

Die erfindungsgemäße Telekommunikationsanordnung zum flexiblen Ausführen eines durch eine Applikation erteilten Schaltauftrags weist folgende Komponenten auf: ein Endgerät, auf dem eine Applikation läuft, die Schaltaufträge erteilen kann, eine Plattform zum Ausführen der Schaltaufträge und eine Steuereinrichtung zum Ausführen des Verfahrens, wie es vorstehend erläutert wurde.

Als zur vorliegenden Erfindung gehörig werden auch ein Computerprogrammprodukt zur Durchführung des erfindungsgemäßen Verfahrens sowie ein maschinenlesbarer Datenträger mit darauf gespeichertem Computerprogrammprodukt bzw. Computerprogramm angesehen.

Weitere Vorteile, Merkmale und Besonderheiten der vorliegenden Erfindung ergeben sich aus der nachfolgenden Beschreibung vorteilhafter Ausführungsformen unter Bezugnahme auf die Zeichnung. Es zeigen schematisch:
- Fig. 1: eine Übersichtsanordnung einer Ausführungsform einer erfindungsgemäßen Tele-kommunikationsanordnung,
- Fig. 2: eine erste Ausführungsform eines erfindungsgemäßen Verfahrens,
- Fig. 3: eine zweite Ausführungsform des erfindungsgemäßen Verfahrens,
- Fig. 4: ein Beispiel für das Durchführen des ersten Ausführungsmodus, und
- Fig. 5: ein Beispiel für das Durchführen des zweiten Ausführungsmodus.

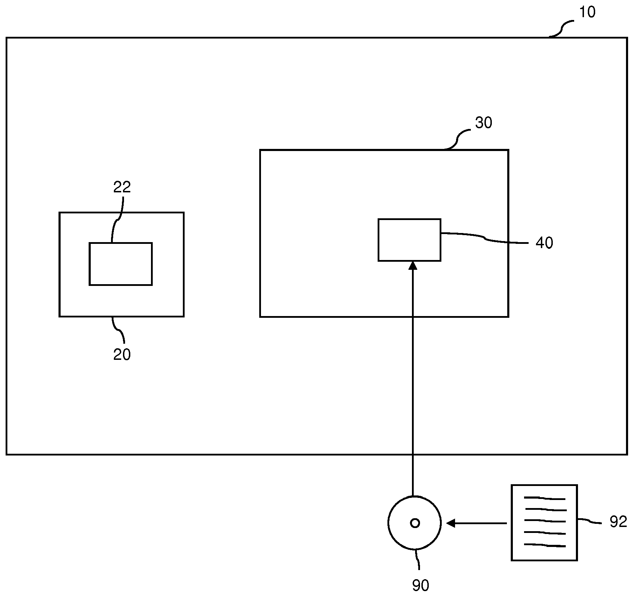

Fig. 1 zeigt ein Telekommunikationssystem 10, das eine Plattform 30 aufweist, die eine Steuereinrichtung 40 enthält. Das Telekommunikationssystem 10 enthält außerdem ein Endgerät 20, auf dem eine nur schematisch dargestellte Applikation 22 läuft. Das Endgerät 20 ist mit der Plattform 30 über eine Datenleitung verbunden. Eine CD-ROM 90 ist als Datenträger schematisch dargestellt, auf dem ein ebenfalls schematisch dargestelltes Computerprogramm 92 gespeichert ist, wobei der maschinenlesbare Datenträger 90 sowie das darauf gespeicherte Computerprogramm 92 zur Verwendung in der Steuereinrichtung 40 bestimmt sind.

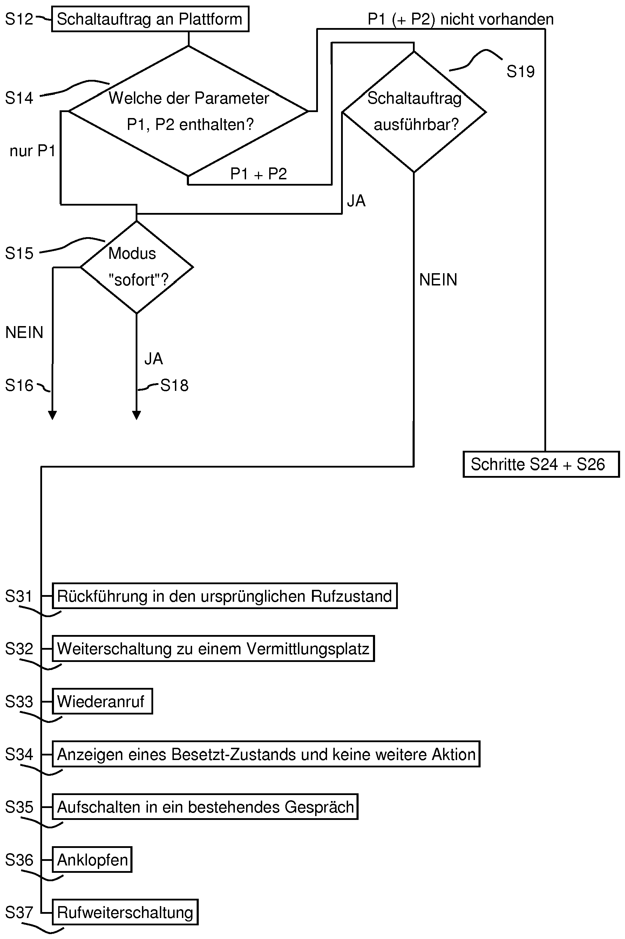

Fig. 2 stellt eine erste Ausführungsform des erfindungsgemäßen Verfahrens dar. In einem Schritt S12 schickt eine Applikation 22 einen Schaltauftrag an die Plattform 30. In einem Schritt S14 prüft die Plattform 30, welche Steuerparameter in dem Schaltauftrag enthalten sind. Konkret auf das erfindungsgemäße Verfahren bezogen bedeutet dies, dass die Plattform 30 prüft, welche von den Parametern P1 und P2 in dem Schaltauftrag enthalten sind. Falls in dem Schaltauftrag nur der Parameter P1 enthalten ist, wird in einem Schritt S15 der Ausführungsmodus ermittelt. Der Schaltauftrag wird dann je nach gewähltem Modus in einem Schritt S16 im ersten Ausführungsmodus vermittlungstechnisch begleitend und geprüft (auch als "atomic" bezeichnet) ausgeführt, oder, falls in dem Parameter P1 der zweite Ausführungsmodus bezeichnet ist, wird in einem Schritt S18 der Schaltauftrag sofort und ungeprüft ausgeführt, was auch als "fire and forget" bzw. "multi-step" bezeichnet wird.

Falls sich aus Schritt S14 ergibt, dass sowohl der Parameter P1 als auch der Parameter P2 in dem Schaltauftrag enthalten sind, wird in einem Schritt S19 geprüft, ob der Schaltauftrag ausführbar ist. Falls der Schaltauftrag ausführbar ist, geht das erfindungsgemäße Verfahren je nach Inhalt des Parameters P1 entweder zur geprüften Ausführung des Schaltauftrags gemäß Schritt S16 oder zur ungeprüften Ausführung des Schaltauftrags gemäß Schritt S18 weiter. Falls der Schaltauftrag nicht ausführbar ist, wird ermittelt, welchen Wert der Parameter P2 aufweist, und abhängig vom Wert des Parameters P2 wird der betreffende der folgenden Schritte im Sinne einer Fehlerbehandlung ausgeführt:
S31: die Rückführung in den ursprünglichen Rufzustand (auch als "Initial" oder "Default Call State" bezeichnet),
S32: die Weiterschaltung zu einem Vermittlungsplatz, was auch als Abwurf oder "Intercept" bezeichnet wird,
S33: ein Wiederanruf ("Recall"),
S34: das Anzeigen eines Besetzt-Zustands und keine weitere Aktion (auch als "Fail" bezeichnet),
S35: das Aufschalten in ein bestehendes Gespräch (auch als "Override" bezeichnet),
S36: ein Anklopfen ("Queue"), oder
S37: die Rufweiterschaltung, auch mit CFNR ("Call Forwarding on No Reply") bezeichnet.

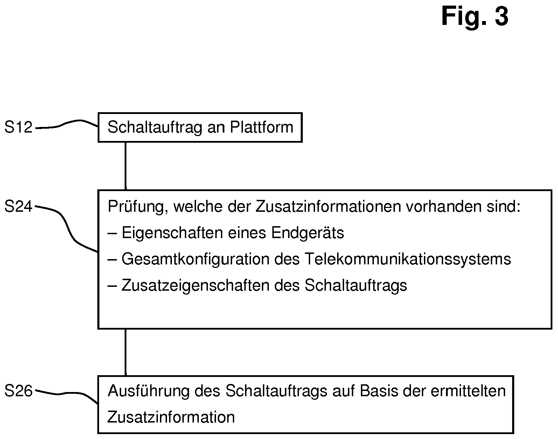

Gemäß einer in Fig. 3 dargelegten alternativen, zweiten Ausführungsform des erfindungsgemäßen Verfahrens schickt in einem Schritt S12 die Applikation 22 einen Schaltauftrag an die Plattform 30. Nachdem die Plattform 30 im Schritt S14 ermittelt hat, dass keine Steuerparameter (genauer gesagt zumindest P1 nicht) in dem Schaltauftrag enthalten sind, prüft die Plattform 30, welche Zusatzinformationen in dem Schaltauftrag vorhanden sind. Je nachdem, welche der folgenden Zusatzinformationen in dem Schaltauftrag vorhanden sind, wird das Verfahren entsprechend ausgeführt. Die für die Durchführung des erfindungsgemäßen Verfahrens relevanten Zusatzinformationen sind:
- die Eigenschaften eines an das Telekommunikationssystem 10 angeschlossenen Endgeräts 20,
- die Gesamtkonfiguration des Telekommunikationssystems 10,
- Zusatzeigenschaften des Schaltauftrags.

Selbstverständlich kann die vorgenannte Liste an Zusatzinformationen noch ergänzt werden.

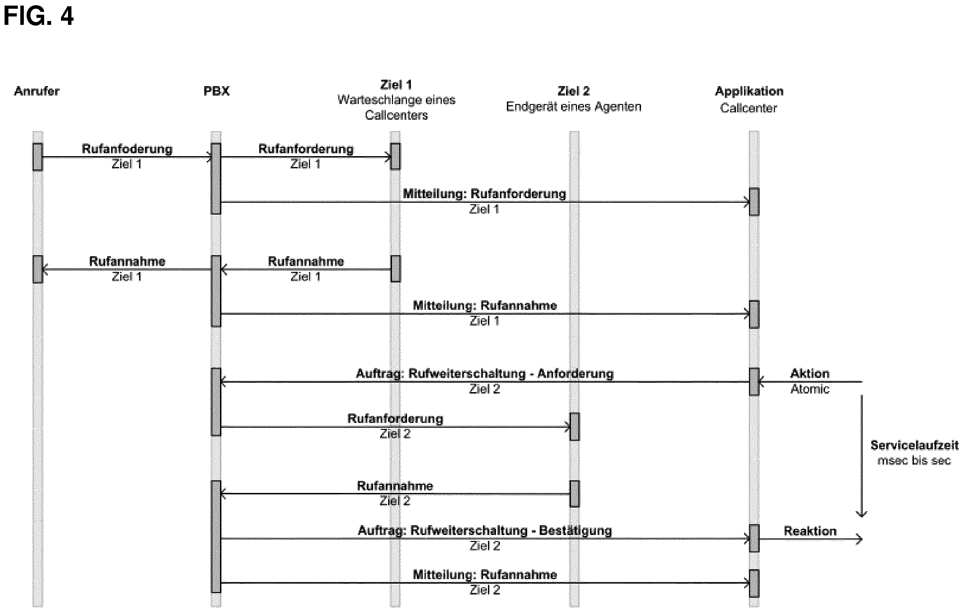

In Fig. 4 ist ein Beispiel für eine Ausführung des erfindungsgemäßen Verfahrens gemäß dem ersten Ausführungsmodus "vermittlungstechnisch begleitend - atomic" dargestellt. Eine Rufanforderung eines Anrufers wurde von einer Warteschlange eines Callcenters (Ziel 1) der Plattform 30 angenommen. Daraufhin agiert eine Callcenter-Applikation 22 und fordert eine Rufweiterschaltung zum Agenten (Ziel 2). Diese Anforderung bedingt zunächst eine Rufanforderung durch die Plattform 30. Sendet daraufhin das Endgerät 20 des Agenten die erfolgreiche eine Rufannahme an die Plattform 30 zurück, wird die Ausführung der Aktion an die Applikation 22 bestätigt. Das Zeitintervall zwischen Aktion und Reaktion wird auch als Servicelaufzeit bezeichnet und dauert unter Umständen bis zu einigen Sekunden. Während der Servicelaufzeit sind weitere Schaltaufträge der Callcenter-Applikation 22 für diese Warteschlange gesperrt, es ist aber auch gleichzeitig sichergestellt, dass die Aktion vermittlungstechnisch fehlerfrei abgeschlossen ist.

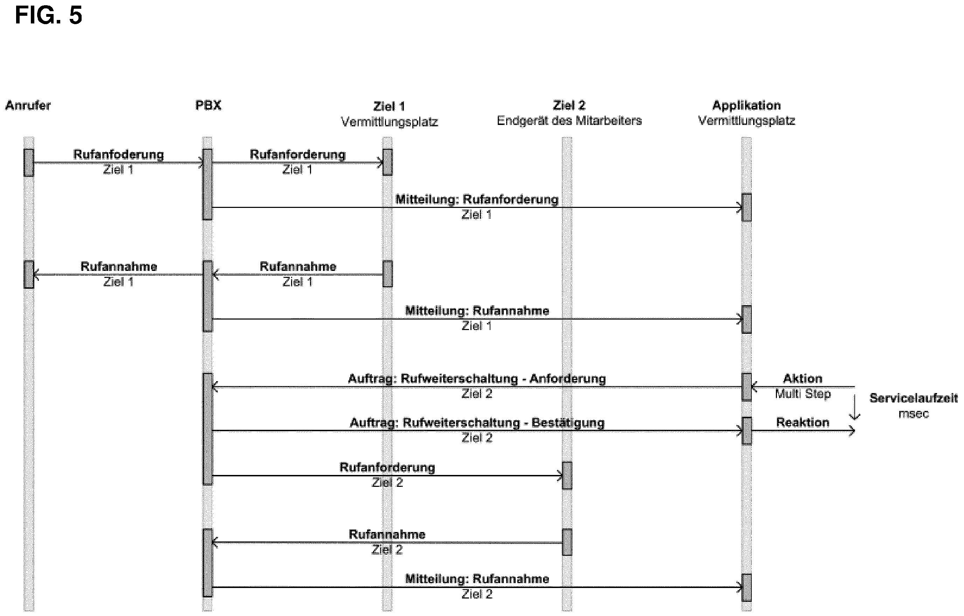

In Fig. 5 ist ein Beispiel für eine Ausführung des erfindungsgemäßen Verfahrens gemäß dem zweiten Ausführungsmodus "vermittlungstechnisch ungeprüft - multi step" dargestellt. Eine Rufanforderung eines Anrufers wurde von einem Vermittlungsplatz (Ziel 1) der Plattform 30 angenommen. Daraufhin wählt der Benutzer am Vermittlungsplatz einen dem Anrufer entsprechenden Mitarbeiter aus und lässt seine Vermittlungsplatz-Applikation 22 eine Rufweiterschaltung zu dem Endgerät 20 des Mitarbeiters (Ziel 2) durchführen. Diese Anforderung bedingt die sofortige Bestätigung der Ausführung der Aktion an die Applikation 22 mit einer entsprechenden Servicelaufzeit im Millisekunden-Bereich. Erst danach erfolgt eine Rufanforderung durch die Plattform 30. Daraufhin kann das Endgerät 20 des Mitarbeiters die erfolgreiche Rufannahme an die Plattform 30 zurücksenden. Durch die kurze Servicelaufzeit ist der Vermittlungsplatz frei für weitere Schaltaufträge, es ist aber nicht sichergestellt, dass die vorherige Aktion vermittlungstechnisch fehlerfrei abgeschlossen wird.

Sofern das erfindungsgemäße Verfahren eine fallweise Bearbeitung des Schaltauftrags vorsieht, der Parameter P1 jedoch nicht vorhanden ist, kann so vorgegangen werden, dass ein eingegangener Schaltauftrag einer Applikation 22 durch eine von der Plattform 30 zur Verfügung gestellte Eigenschaft des Endgerätes 20, der Konfiguration der Plattform 30 selbst oder der Gesamtkonfiguration des Telekommunikationssystems 10 ausgeführt wird.

Es ist festzuhalten, dass die unter Bezug auf die dargestellten Ausführungsformen beschriebenen Merkmale der Erfindung, wie beispielsweise die Art und Ausgestaltung der einzelnen Nachrichten und Parameter, auch bei anderen Ausführungsformen vorhanden sein können, außer wenn es anders angegeben ist oder sich aus technischen Gründen von selbst verbietet. Von derartigen, in Kombination beschriebenen, Merkmalen einzelner Ausführungsformen müssen außerdem nicht notwendigerweise immer alle Merkmale in einer betreffenden Ausführungsform realisiert sein. Dennoch ist der Schutzumfang der Erfindung durch die beigefügten Ansprüche definiert.

### Bezugszeichenliste

- 10 =: Telekommunikationssystem
- 20 =: Endgerät
- 22 =: Applikation
- 30 =: Plattform
- 40 =: Steuereinrichtung
- 90 =: maschinenlesbarer Datenträger
- 92 =: Computerprogramm

- S12-S37 =: Schritt
- P1-P2 =: Parameter

## Patentansprüche

1. Verfahren zum flexiblen Steuern eines Telekommunikationssystems (10) durch einen durch eine Applikation (22) an eine Plattform (30) erteilten Schaltauftrag, wobei der Schaltauftrag in einem
a) ersten Ausführungsmodus, in dem der Schaltauftrag vermittlungstechnisch begleitend und geprüft ausgeführt wird, oder
b) zweiten Ausführungsmodus, in dem der Schaltauftrag sofort und ungeprüft ausgeführt wird,
ausgeführt werden kann,
umfassend folgende Schritte:
- die Applikation (22) schickt den Schaltauftrag an die Plattform (30) und
- die Plattform (30) führt den Schaltauftrag aus,
**dadurch gekennzeichnet, dass** die Applikation (22) vor dem Erteilen des Schaltauftrags und/oder die Plattform (30) vor der Durchführung des Schaltauftrags fallweise prüft und entscheidet, in welchem von dem ersten oder zweiten Ausführungsmodus dieser Schaltauftrag ausgeführt werden soll.

2. Verfahren nach Anspruch 1,
**dadurch gekennzeichnet, dass** die Applikation (22) den Schaltauftrag mit einem ersten Steuerparameter (P1) versieht, der den durchzuführenden Ausführungsmodus bezeichnet.

3. Verfahren nach Anspruch 2,
**dadurch gekennzeichnet, dass** die Applikation (22) den Schaltauftrag mit einem zweiten Steuerparameter (P2) versieht, der für den Fall, dass die Plattform (30) den Schaltauftrag nicht ausführen kann, eine Fehlerbehandlung ermöglicht und festlegt, welchen Zustand die Plattform (30) einnehmen soll.

4. Verfahren nach einem der vorhergehenden Ansprüche,
**dadurch gekennzeichnet, dass** die Applikation (22) bei ihrem Start prüft, ob die Plattform (30) eine flexible Behandlung eines Schaltauftrags zulässt.

5. Verfahren nach einem der vorhergehenden Ansprüche,
**dadurch gekennzeichnet, dass** die Plattform (30) die Eigenschaften eines an das Telekommunikationssystem (10) angeschlossenen Endgeräts (20) prüft und den Schaltauftrag nach Maßgabe dieser Eigenschaften ausführt.

6. Verfahren nach einem der vorhergehenden Ansprüche,
**dadurch gekennzeichnet, dass** die Plattform (30) die Gesamtkonfiguration des Telekommunikationssystems (10) prüft und den Schaltauftrag nach Maßgabe dieser Gesamtkonfiguration ausführt.

7. Verfahren nach einem der vorhergehenden Ansprüche,
**dadurch gekennzeichnet, dass** die Plattform (30) Zusatzeigenschaften des Schaltauftrags prüft und den Schaltauftrag nach Maßgabe dieser Zusatzeigenschaften ausführt.

8. Computerprogrammprodukt (92) zur Durchführung des Verfahrens gemäß einem der vorhergehenden Ansprüche.

9. Maschinenlesbarer Datenträger (90) mit darauf gespeichertem Computerprogrammprodukt (92) gemäß Anspruch 8.

10. Telekommunikationsanordnung (10) zum flexiblen Ausführen eines durch eine Applikation (22) erteilten Schaltauftrags, umfassend:
- ein Endgerät (20), auf dem eine Applikation (22) läuft, die Schaltaufträge erteilen kann,
- eine Plattform (30) zum Ausführen der Schaltaufträge, und
- eine Steuereinrichtung (40) zum Ausführen des Verfahrens gemäß einem der Ansprüche 1 bis 7.

## Claims

1. A method for flexible control of a telecommunication system (10) by a switching order issued by an application (22) to a platform (30), wherein the switching order can be executed in a
a) first execution mode, in which the switching order is executed concomitantly and in a reviewed manner, or in a
b) second execution mode, in which the switching order is executed immediately and in a non-reviewed manner,
comprising the following steps:
o the application (22) sends the switching order to the platform (30) and
o the platform (30) executes the switching order,
**characterized in that** the application (22) reviews and determines on a case-by-case basis, prior to issuing the switching order, and/or the platform (30) reviews and determines on a case-by-case basis, prior to executing the switching order, in which of the first or second execution modes this switching order will be executed.

2. The method according to Claim 1, **characterized in that** the application (22) provides the switching order with a first control parameter (PI), which identifies the execution mode to be used.

3. The method according to Claim 2, **characterized in that** the application (22) provides the switching order with a second control parameter (P2), which, in case that the platform (30) cannot execute the switching order, makes an error correction possible and determines which state the platform (30) should assume.

4. The method according to any one of the preceding claims, **characterized in that** the application (22) reviews upon its initialization whether the platform (30) allows a flexible processing of a switching order.

5. The method according to any one of the preceding claims, **characterized in that** the platform (30) reviews the characteristics of a terminal (20) connected to the telecommunication system (10) and executes the switching order according to these characteristics.

6. The method according to any one of the preceding claims, **characterized in that** the platform (30) reviews the overall configuration of the telecommunication system (10) and executes the switching order according to this overall configuration.

7. The method according to any one of the preceding claims, **characterized in that** the platform (30) reviews additional characteristics of the switching order and executes the switching order according to these additional characteristics.

8. A computer program product (92) for executing the method according to any one of the preceding claims.

9. A machine-readable data carrier (90) with a computer program product (92) according to Claim 8 stored on the same.

10. A telecommunications arrangement (10) for the flexible execution of a switching order issued by an application (22), comprising:
o a terminal (20) running an application (22), which can issue switching orders,
o a platform (30) for executing the switching orders, and
o a control device (40) for executing the method according to any one of Claims 1 to 7.

## Revendications

1. Procédé de commande flexible d'un système de télécommunication (10) par un programme de commande fourni sur une plateforme (30) par une application (22), dans lequel le programme de commande peut être exécuté dans
a) un premier mode d'exécution, dans lequel le programme de commande est exécuté de manière vérifiée et accompagnée selon une technique de commutation, ou
b) un second mode d'exécution, dans lequel le programme de commande peut être exécuté immédiatement et non vérifié,
comportant les étapes suivantes :
- l'application (22) envoie le programme de commande à la plateforme (30) et
- la plateforme (30) exécute le programme de commande,
**caractérisé en ce que** l'application (22) avant la fourniture du programme de commandes et/ou la plateforme (30) avant la mise en oeuvre du programme de commande vérifie et décide, le cas échéant, dans lequel du premier ou du second mode d'exécution ce programme de commande doit être exécuté.

2. Procédé selon la revendication 1,
**caractérisé en ce que** l'application (22) pourvoit le programme de commande d'un premier paramètre de commande (P1) qui désigne le mode d'exécution à mettre en oeuvre.

3. Procédé selon la revendication 2,
**caractérisé en ce que** l'application (22) pourvoit le programme de commande d'un second paramètre de commande (P2) qui, pour le cas que la plateforme (30) ne peut pas exécuter le programme de commande, permet un traitement d'erreur et spécifie l'état que doit prendre la plateforme (30).

4. Procédé selon l'une quelconque des revendications précédentes,
**caractérisé en ce que** l'application (22) vérifie à son démarrage si la plateforme (30) autorise un traitement flexible d'un programme de commande.

5. Procédé selon l'une quelconque des revendications précédentes,
**caractérisé en ce que** la plateforme (30) vérifie les caractéristiques d'un appareil terminal (20) raccordé au système de télécommunication (10) et exécute le programme de commande conformément à ces caractéristiques.

6. Procédé selon l'une quelconque des revendications précédentes,
**caractérisé en ce que** la plateforme (30) vérifie la configuration complète du système de télécommunication (10) et exécute le programme de commande conformément à la configuration complète.

7. Procédé selon l'une quelconque des revendications précédentes,
**caractérisé en ce que** la plateforme (30) vérifie des caractéristiques supplémentaires du programme de commande et exécute le programme de commande conformément à ces caractéristiques supplémentaires.

8. Produit-programme d'ordinateur (92) pour la mise en oeuvre du procédé selon l'une quelconque des revendications précédentes.

9. Support de données lisible par machine (90) sur lequel est enregistré un produit-programme d'ordinateur (92) selon la revendication 8.

10. Système télécommunication (10) pour l'exécution flexible d'un programme de commande remis par une application (22), comportant :
- un appareil terminal (20), sur lequel se déroule une application (22) qui peut fournir des programmes de commande,
- une plateforme (30) pour l'exécution des programmes de commande, et
- un dispositif de commande (40) pour l'exécution du procédé selon l'une quelconque des revendications 1 à 7.
